# EUROPEAN PATENT SPECIFICATION

(11) **EP 1 378 387 B1**
(45) Date of publication and mention of the grant of the patent: **21.12.2005**
(21) Application number: 02077646.4
(22) Date of filing: 01.07.2002
(51) Int. Cl.: B60J 7/22

(54) **Open roof assembly for a vehicle**
Öffnungsfähige Dachkonstruktion für ein Fahrzeug
Assemblage pour un toit ouvrant de véhicule

(43) Date of publication of application: 07.01.2004
(73) Proprietor: Inalfa Roof Systems Group B.V., 5804 AH Venray (NL)
(72) Inventor: Testroote, Ramon L. J., 5911 CW Venlo (NL)
(74) Representative: Voncken, Bartholomeus Maria Ch.

(56) References cited:
- EP-A- 0 490 213
- DE-A- 4 034 851
- DE-C- 19 520 752
- US-A- 4 867 503
- US-A- 5 052 745

## Description

The invention relates to an open roof assembly for a vehicle as defined in the preamble of claim 1.

Fluctuations of the air stream around an open roof assembly, especially when the closure means is in its open position, cause effects also known as buffeting and boom. These buffeting and boom effects may lead to a vibration of parts of the open roof assembly, which vibration may be supported and eventually amplified by other parts of the open roof assembly. Such vibrations make a car uncomfortable to drive. US-A-5.052.745, which defines the closest prior art, already shows vibration damping means shaped as an our guiding element

It is an object of the present invention to provide an improved open roof assembly, in which these problems are solved in an easy, but nevertheless effective manner.

Thus, according to the present invention there is provided an open roof assembly for a vehicle, comprising a roof opening defined in a stationary part of the roof of the vehicle and a closure means which can be moved between a closed position for closing said roof opening and an open position for opening said roof opening, wherein at least one of the constituting parts of the open roof assembly comprises vibration damping means attached thereto; and wherein the vibration damping means comprises a flexible body in which at least one mass member is housed.

The combination of flexible body with member (or mass members) is very effective in damping vibrations.

The section of the constituting part to which the vibration damping means are attached, in a preferred embodiment will be a free edge of the constituting part of the open roof assembly which is prone to vibrations. Due to the attached vibration damping means the vibrations of said constituting part of the open roof assembly are diminished or even eliminated.

In a preferred embodiment the invention provides an open roof assembly, wherein in front of the roof opening as seen in a direction of movement of the vehicle, a wind deflector is positioned extending substantially transversally to the direction of movement and supporting said vibration damping means.

Such a wind deflector sometimes causes an amplification of vibrations due to buffeting and boom, and thus damping the vibration of such a wind deflector is very effective in achieving a car which is more comfortable to drive.

However, it is also possible that the vibration damping means are attached to a stationary rim extending around the roof opening. Further, the vibration damping means may be attached to the closure means. Also a combination of these embodiments is possible.

The mass member might comprise a member of a heavy material, such as lead or similar material. However, also other materials having a high specific weight may be applied.

In another embodiment, the mass member is a granulated member. Like this, embedding the mass member in and distributing it along the flexible body is very easy. The granulated member may be housed in a space allowing some movement of the member relative to the flexible body. This movement is very effective in damping vibrations.

Still further, it is possible that the flexible body is elongate, wherein along the length of the elongate flexible body a number of distinct mass members are housed therein, whereas the mass of the mass members varies along the length of the elongate flexible body. By choosing appropiate masses of the mass members along the length of the elongate flexible body, the characteristics of the vibration damping means can closely match the resonance properties of the respective constituting part of the open roof assembly.

Preferably, the flexible body is made of soft rubber. However, also any other flexible material having appropriate properties may be applied.

In a special embodiment of the open roof assembly according to the invention, the flexible body is shaped as a sealing means for sealingly engaging an adjacently positionable constituting part of the open roof assembly. In such a manner, the function of sealing means and vibration damping means is combined in one single member. Because an open roof assembly most times already comprises sealing means, this embodiment limits the number of parts of the open roof assembly, and thus its production cost.

When, according to another embodiment of the open roof assembly according to the invention, the flexible body is detachably attached to the respective constituting part, an open roof assembly is obtained which is very versatile. Replacing the flexible body for another flexible body offers the possibility of exactly matching the properties of the vibration damping means to the vibrations of the open roof assembly.

Such a detachable attachment of the flexible body to the respective constituting part can be realised in several ways. In a preferred embodiment, the constituting part (for example a free edge thereof) carries an array of hook members, each with a hook end part extending substantially in parallel to the constituting part (e.g the free edge), wherein the hook end part of at least one hook member extends oppositely to the hook end part of the remaining hook members, and wherein the flexible body comprises correspondingly shaped slits for receiving the hook members. Applying the hook members with their hook end parts in the slits of the flexible member attaches the flexible body to the constituting part (e.g. the free edge).

Preferably, the at least one hook member with oppositely extending hook end part is positioned at an end of the array of hook members. This simplifies the attachment procedure of the flexible body to the constituting part.

When, finally, in an unloaded position of the flexible body, the distance between adjacent slits is slightly less then the distance between adjacent hook members, the flexible body is slightly stressed in its attached position, such that a detachment of the flexible body from the constituting part is effectively prevented.

Hereinafter the invention will be elucidated while referring to the drawing, in which an embodiment of the open roof assembly according to the invention is illustrated.
Figure 1 shows, schematically, part of a vehicle provided with an open roof assembly according to the invention;
figure 2 shows, on a larger scale, a top plan view of a wind deflector of the open roof assembly of fig. 1, and
figure 3 shows, on a still larger scale, a cross section according to III-III in fig. 2.

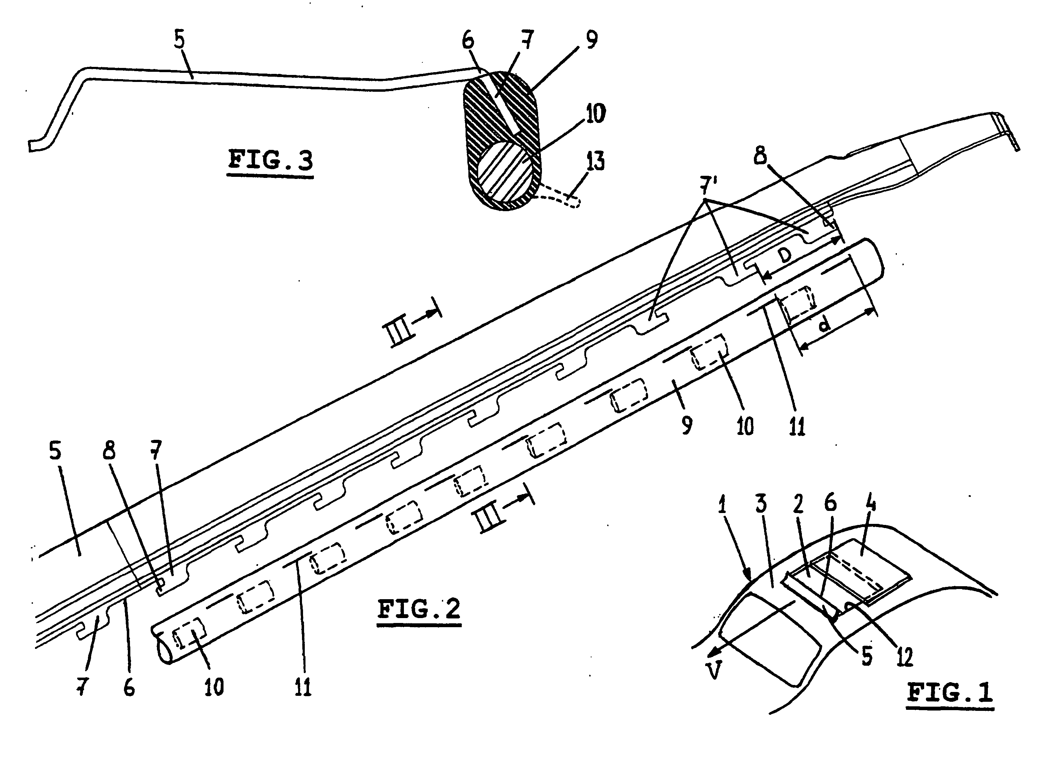

Referring to fig. 1, there is shown part of a vehicle 1 with an open roof assembly. The open roof assembly comprises a roof opening 2 defined in a stationary part 3 of the roof of the vehicle. A closure mean 4 can be moved between a closed position (not illustrated) for closing said roof opening 2 and an open position (illustrated) for opening said roof opening 2. In front of the roof opening 2, as seen in a direction of movement V of the vehicle 1, a wind deflector 5 is positioned extending substantially transversely to the direction of movement V. Said wind deflector 5 comprises a free trailing edge 6.

In fig. 2 the wind deflector 5 is partially shown in a top plan view. Its free trailing edge 6 carries an array of hook members 7, 7', each with a hook end part 8 extending substantially in parallel to the free edge 6. At the end of the array of hook members three hook members 7' are provided, of which the hook end part 8 extends oppositely to the hook end part 8 of the remaining hook members 7. The reason herefore will be elucidated later.

An elongate flexible body 9 (for example made of soft rubber) has embedded therein mass members 10. These mass members generally are made of a heavy material, such as lead or a corresponding material with high specific weight.

The flexible body comprises slits 11 having an internal shape which corresponds with the shape of the hook members 7, 7' of the wind deflector 5. By introducing the hook members 7, 7' into the slits 11 the flexible body 9 can be attached to the wind deflector 5. The distance D between adjacent hook members 7' is slightly larger than the distance d between adjacent slits 11. As a result, the flexible body 9 has to be stretched somewhat for the introduction of the hook members 7, 7' into the slits 11. Thus, the flexible body will be attached firmly to the wind deflector 5.

Figure 3 shows a cross section across the wind deflector 5 with attached flexible body 9.

By means of an appropriate choice of the mass of the mass members 10 and their position along the flexible body 9 it is possible to provide the wind deflector 5 with such properties, that a damping of vibrations (especially, but not exclusively, arisen due to boom and buffeting effects) will occur. Thus, the flexible body 9 with embedded mass members 10 will act as vibration damping means.

It should be noted, that the mass of the mass members 10 may vary along the length of the elongate flexible body 9.

Although in the above an embodiment has been illustrated and described in which vibration damping means are attached to a free edge 6 of a wind deflector 5, such vibration damping means also may be attached to other parts of such constituting parts, or even to other constituting parts of the open roof assembly, such as a stationary rim 12 extending around the roof opening 3 or the closure means 4. A combination of these embodiments also is possible.

Although in fig. 2 the mass members 10 are illustrated as monolithic bodies, it is also possible that the mass members 10 are granulated members, which might be housed in spaces within the flexible body.

Further it is noted, that the flexible body 9 also may act as a sealing means for sealingly engaging an adjacently positionable constituting part of the open roof assembly. Thus, referring to fig. 3, the flexible body 9 could be provided with a sealing lip 13 or alike.

The invention is not limited to the embodiment described before which can be varied widely within the scope of the invention as defined by the appending claims.

## Claims

1. Open roof assembly for a vehicle (1), comprising a roof opening (2) defined in a stationary part (3) of the roof of the vehicle and a closure means (4) which can be moved between a closed position for closing said roof opening and an open position for opening said roof opening, wherein at least one of the constituting parts of the open roof assembly comprises vibration damping means (9,10) attached thereto, **characterized in that** the vibration damping means comprises a flexible body (9) in which at least one mass member (10) is embedded.

2. Open roof assembly according to claim 1, wherein in front of the roof opening (2), as seen in a direction of movement (V) of the vehicle (1), a wind deflector (5) is positioned extending substantially transversally to the direction of movement and supporting said vibration damping means (9,10).

3. Open roof assembly according to claim 1, wherein the damping means are attached to a stationary rim (12) extending around the roof opening (2).

4. Open roof assembly according to claim 1, wherein the damping means are attached to the closure means (4).

5. Open roof assembly according to any of claims 1-4, wherein the mass member (10) comprises a member of a heavy material, such as lead or similar material.

6. Open roof assembly according to claim 4 or 5, wherein the mass member (10) is a granulated member.

7. Open roof assembly according to any of the claims 4-6, wherein the flexible body (9) is elongate and wherein along the length of the elongate flexible body a number of distinct mass members (10) are housed therein, whereas the mass of the mass members (10) varies along the length of the elongate flexible body (9).

8. Open roof assembly according to any of the claims 4-7, wherein the flexible body (9) is made of soft rubber.

9. Open roof assembly according to any of the claims 4-8, wherein the flexible body (9) is shaped as a sealing means (13) for sealingly engaging an adjacently positionable constituting part of the open roof assembly.

10. Open roof assembly according to any of the claims 4-9, wherein the flexible body (9) is detachably attached to the respective constituting part.

11. Open roof assembly according to claim 10, wherein the constituting part carries an array of hook members (7,7'), each with a hook end part (8) extending substantially in parallel to the constituting part, wherein the hook end part (8) of at least one hook member (7') extends oppositely to the hook end part (8) of the remaining hook members (7), and wherein the flexible body (9) comprises correspondingly shaped slits (11) for receiving the hook members.

12. Open roof assembly according to claim 11, wherein the at least one hook member (7') with oppositely extending hook end part (8) is positioned at an end of the array of hook members.

13. Open roof assembly according to claim 11 or 12, wherein, in an unloaded position of the flexible body (9), the distance (d) between adjacent slits (11) is slightly less then the distance (D) between adjacent hook members (7,7').

## Patentansprüche

1. Offendachanordnung für ein Fahrzeug (1), aufweisend eine Dachöffnung (2), welche in einem stationären Abschnitt (3) des Dachs des Fahrzeugs definiert ist, und ein Schließmittel (4), welches zwischen einer Schließposition zum Schließen der Dachöffnung und einer Offenposition zum Öffnen der Dachöffnung bewegbar ist, wobei mindestens eines der ausbildenden Teile der Offendachanordnung daran angebrachte Vibrations-Dämpfungsmittel (9,10) aufweist, **dadurch gekennzeichnet, dass** die Vibrations-Dämpfungsmittel einen flexiblen Körper (9) aufweisen, in welchem mindestens ein Masseelement untergebracht ist.

2. Offendachanordnung gemäß Anspruch 1, wobei vor der Dachöffnung (2), gesehen in Bewegungsrichtung (V) des Fahrzeugs (1), ein Windabweiser (5) positioniert ist, welcher sich im Wesentlichen quer zur Bewegungsrichtung erstreckt und die Vibrations-Dämpfungsmittel (9, 10) hält.

3. Offendachanordnung gemäß Anspruch 1, wobei die Dämpfungsmittel an einem stationären Rand (12) angebracht sind, welcher sich um die Dachöffnung (2) herum erstreckt.

4. Offendachanordnung gemäß Anspruch 1, wobei die Dämpfungsmittel an dem Schließmittel angebracht sind.

5. Offendachanordnung gemäß eine der Ansprüche 1 - 4, wobei das Masseelement (10) ein Element aus einem schweren Material wie beispielsweise Blei oder einem ähnlichen Material aufweist.

6. Offendachkonstruktion gemäß Anspruch 4 oder 5, wobei das Masseelement (10) ein granuliertes Material ist.

7. Offendachanordnung gemäß eine der Ansprüche 4 - 6, wobei der flexible Körper (9) länglich ist und wobei entlang der Länge des länglichen, flexiblen Körpers eine Anzahl von einzelnen Masseelementen (10) darin untergebracht sind, wobei die Masse der Messeelemente (10) entlang der Länge des länglichen, flexiblen Körpers (9) variiert.

8. Offendachanordnung gemäß einem der Ansprüche 4 - 7, wobei der flexible Körper (9) aus weichem Gummi gemacht ist.

9. Offendachanordnung gemäß einem der Ansprüche 4 - 8, wobei der flexible Körper (9) als ein Dichtmittel (13) gestaltet ist zum abdichtenden Im-Eingriff-Stehen mit einem benachbart positionierbaren ausbildenden Teil der Offendachanordnung.

10. Offendachanordnung gemäß einem der Ansprüche 4 - 9, wobei der flexible Körper (9) an dem jeweiligen ausbildenden Teil lösbar angebracht ist.

11. Offendachanordnung gemäß Anspruch 10, wobei das ausbildende Teil eine Anordnung von Hakenelementen (7, 7') trägt, jedes mit einem Hakenendabschnitt (8), welcher sich im Wesentlichen parallel zu dem ausbildenden Teil erstreckt, wobei der Hakenendabschnitt (8) von mindestens einem Hakenelement (7') sich zu dem Hakenendabschnitt (8) der restlichen Hakenelemente (7) entgegengesetzt erstreckt, und wobei der flexible Körper (9) korrespondierend gestaltete Schlitze (11) zum Aufnehmen der Hakenelemente aufweist.

12. Offendachanordnung gemäß Anspruch 11, wobei das mindestens eine Hakenelement (7') mit sich entgegengesetzt erstreckendem Hakenendabschnitt (8) an einem Ende des Bereichs der Hakenelemente positioniert ist.

13. Offendachanordnung gemäß Anspruch 11 oder 12, wobei in einer unbelasteten Position des flexiblen Körpers (9) der Abstand (d) zwischen benachbarten Schlitzen etwas kleiner als der Abstand (D) zwischen benachbarten Hakenelementen (7,7') ist.

## Revendications

1. Ensemble de toit ouvrant pour un véhicule (1), comprenant une ouverture de toit (2) définie dans une partie fixe (3) du toit du véhicule et un moyen de fermeture (4) qui peut être déplacé entre une position fermée pour la fermeture de ladite ouverture de toit et une position ouverte pour ladite ouverture de l'ouverture de toit, dans lequel au moins l'une des parties constituantes de l'ensemble de toit ouvert comprend des moyens d'amortissement de vibrations (9, 10) fixés sur celui-ci,
**caractérisé en ce que**
les moyens d'amortissement de vibrations comprennent un corps flexible (9) dans lequel est enrobé au moins un élément de masse (10).

2. Ensemble de toit ouvrant selon la revendication 1, dans lequel, devant l'ouverture de toit (2), vu dans la direction de mouvement (V) du véhicule (1), est positionné un déflecteur de vent (5) s'étendant sensiblement transversalement à la direction du mouvement et supportant lesdits moyens d'amortissement de vibrations (9, 10).

3. Ensemble de toit ouvrant selon la revendication 1, dans lequel les moyens d'amortissement sont fixés sur un bord fixe (12) s'étendant autour de l'ouverture de toit (2).

4. Ensemble de toit ouvrant selon la revendication 1, dans lequel les moyens d'amortissement sont fixés sur les moyens de fermeture (4).

5. Ensemble de toit ouvrant selon l'une quelconque des revendications 1-4, dans lequel l'élément de masse (10) comprend un élément de matériau lourd, tel que du plomb ou un matériau similaire.

6. Ensemble de toit ouvrant selon l'une quelconque des revendications 4-5, dans lequel l'élément de masse (10) est un élément granulé.

7. Ensemble de toit ouvrant selon l'une quelconque des revendications 4-6, dans lequel le corps flexible (9) est allongé et dans lequel, sur la longueur du corps souple allongé, sont logés un certain nombre d'éléments de masse distincts (10), tandis que la masse des éléments de masse (10) varie sur toute la longueur de l'élément souple allongé (9).

8. Ensemble de toit ouvrant selon l'une quelconque des revendications 4-7, dans lequel le corps souple (9) est réalisé en caoutchouc mou.

9. Ensemble de toit ouvrant selon l'une quelconque des revendications 4-8, dans lequel le corps souple (9) est formé en tant que moyen d'étanchéité (13) pour coopérer de façon étanche avec une partie constituante pouvant être positionnée de façon contiguë de l'ensemble de toit ouvrant.

10. Ensemble de toit ouvrant selon l'une quelconque des revendications 4-9, dans lequel le corps souple (9) est fixé de façon amovible sur la partie constituante respective.

11. Ensemble de toit ouvrant selon la revendication 10, dans lequel la partie constituante porte un ensemble d'éléments accrochés (7, 7'), chaque élément comportant une partie d'extrémité de crochet (8) s'étendant sensiblement parallèlement à la partie constituante, dans lequel la partie d'extrémité de crochet (8) d'au moins un élément de crochet (7') s'étend de façon opposée à la partie d'extrémité de crochet (8) des éléments de crochets restants (7), et dans lequel le corps souple (9) comprend des fentes formées de façon correspondante (11) pour recevoir les éléments de crochets.

12. Ensemble de toit ouvrant selon la revendication 11, dans lequel le au moins un élément de crochet (7') avec une partie d'extrémité de crochet s'étendant en opposition (8) est positionné sur une extrémité de l'ensemble d'éléments de crochets.

13. Ensemble de toit ouvrant selon la revendication 11 ou 12, dans lequel, dans une position non sollicitée du corps souple (9), la distance (d) entre les fentes contiguës (11) est légèrement inférieure à la distance (D) entre les éléments de crochets contigus (7, 7').
